# EUROPEAN PATENT SPECIFICATION

(11) **EP 1 734 295 B1**
(45) Date of publication and mention of the grant of the patent: **24.12.2008**
(21) Application number: 05425427.1
(22) Date of filing: 15.06.2005
(51) Int. Cl.: F16K 17/04, F15B 11/044, G05D 16/10

(54) **A valve for progressive braking**
Ventil zum progressiven Bremsen
Vanne de freinage progressif

(43) Date of publication of application: 20.12.2006
(73) Proprietor: Bosch Rexroth Oil Control S.p.A., 20149 Milano (MI) (IT)
(72) Inventor: Storci, Andrea, 41015 Nonantola (Modena) (IT)
(74) Representative: Gotra, Stefano

(56) References cited:
- EP-A- 0 604 332
- EP-A- 0 942 346
- DE-A1- 2 819 679
- DE-B- 1 300 716
- US-A- 5 934 326
- US-A- 6 039 070
- US-A1- 2003 196 697

## Description

Progressive braking valves in hydraulic pistons systems are constituted by a modulating maximum pressure valve having an obturator which strikes against a sealed seating by action of a spring. The sealed spring of the valve is in an intermediate position with respect to a passage channel which extends from a valve inlet chamber to a valve outlet chamber. The obturator strikes the sealed seating, the passage channel is closed and the fluid cannot transit from the inlet chamber to the outlet chamber. The obturator is conformed in such a way that the pressure internally of the inlet chamber tends to distance it from the sealed seating. When the pressure internally of the inlet chamber reaches a value at which the thrust exerted on the obturator exceeds the thrust exerted by the spring, the obturator frees the sealed seating and the fluid can flow to the outlet chamber of the valve from which it is discharged to the outside.

A hydraulic actuator, such as for example a cylinder or a rotary motor, generally exhibits two openings for inlet and discharge of an operating fluid, which openings are connected to relative inlet/discharge conduits. By sending pressurised fluid to one of the conduits, the actuator is set in motion, discharging fluid from the other conduit. The braking of an actuator in movement is achieved by removing pressurised fluid inlet from the inlet conduit and blocking the discharge conduit. The blocking of the discharge conduit leads to a brusque increase in pressure internally of the discharge conduit due to the inertia of the masses connected to the actuator. It is therefore necessary for the discharge conduit to be connected to a braking valve which, at a determined pressure level, opens a discharge for the fluid.

Progressive braking valves are structured in such a way that the pressure required for causing the opening of the sealed seating progressively increases over a predetermined time interval. In an initial stage of the braking action, the pressure needed to cause the opening of the valve is relatively low and increases progressively up to a relatively high level. This enables a progressive stopping of the actuator, in the absence of brusque reversals or vibrations.

A first solution which enables a progressive braking action of the valves is achieved by causing a progressive spring compression which acts on the obturator. In an initial stage of the braking the spring is of a certain length and thus exerts a certain thrust on the obturator. Part of the fluid in the valve inlet chamber is removed and, through a channel afforded internally of the obturator, is sent on to a cylinder which a piston placed in contact with the end of the spring that is more distant from the obturator. The fluid which supplies the cylinder induces a displacement of the piston which progressively compresses the spring. In this way the thrust the spring exerts on the obturator progressively increases over time, the exact time interval depending on the speed with which the cylinder fills.

Such a type of solution is disclosed in document EP 604 332, which discloses a method for setting into motion or stop the hydraulic motor driving an assembly exhibiting a high moment of inertia, which consists in fitting to the pressure circuit supplying the motor a set of two valves which limit the pressure in each branch of the motor to a given pressure level. The set of valves is designed so that the variation in pressure inside the motor between a pressure and a predetermined pressure corresponding to the value which is not to be exceeded, is brought about in two distinct phases separated from one another by a threshold at a pressure which is intermediate between the aforementioned values.

A valve comprising the features of the preamble of claim 1 is known from the documents US 20030196697.

A second solution to give a progressive braking action includes, apart from sending pressurised fluid to the piston acting on the spring, also sending the pressurised fluid to a differential chamber that faces a surface of the obturator arranged in an opposite position and being smaller than the surface on which the pressure of the discharge branch of the actuator acts. When the differential chamber is pressurised, a thrust is effected on the obturator which opposes the thrust exerted by the pressure of the actuator discharge branch.

The two solutions described above are rather complicated from a structural point of view in that they require rather complex and long channels, which indeed pass through the obturator, in order to bring the fluid to the piston which acts on the spring. It is also important to consider that the length and complexity of these internal channels slow down the valve response to the pressure variations, both in opening and closing, making its reactions slow especially when the actuator is frequently called into use, and is therefore brusquely stopping and starting.

The main aim of the present invention is to offer a progressive braking valve that is easy to make and is ready and reactive in response to the variations of inlet pressure. This aim is attained by the valve as described in the first appended claim.

The slidability of the sealed seating along the longitudinal sliding axis of the obturator considerably simplifies the realisation and arrangement of the internal fluid passage channels, which do not need to reach the far end of the spring. These channels are considerably shorter than in valves of known type, so that the valve of the present invention is especially rapid and reactive to the pressure variations it is subject to.

Further characteristics and advantages of the valve for progressive braking of the present invention will better emerge from the detailed description that follows with reference to the enclosed figures of the drawings, given by way of non-limiting example, in which:
Figures from 1 to 4 show a valve of the present invention in four different operational configurations;
Figure 5 shows a two-way braking device, made by connecting two valves of the present invention;
Figure 6 is an operating diagram with time-pressure coordinates of a valve of the present invention;

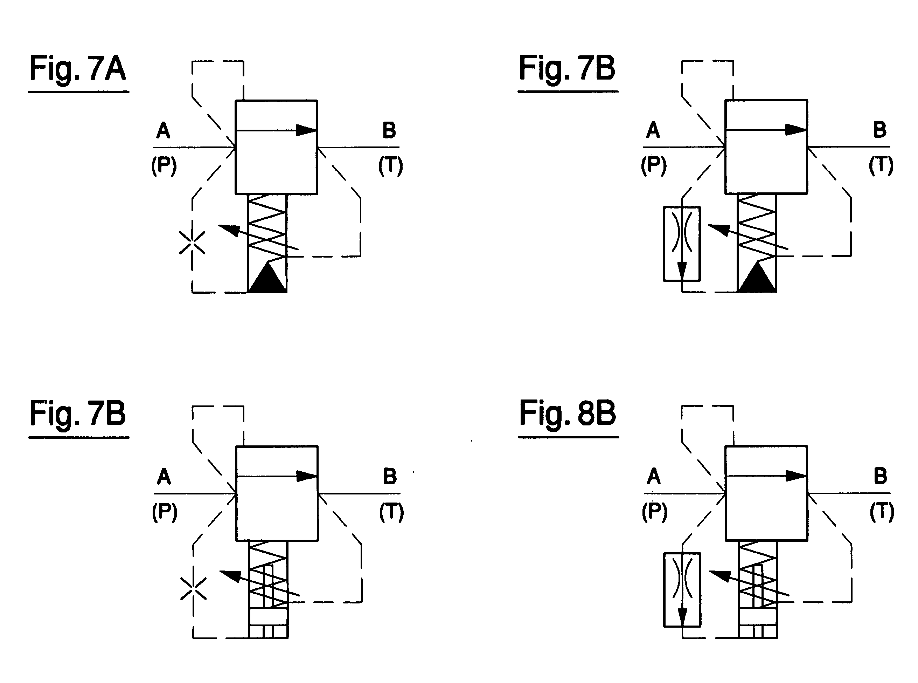

Figures 7a, 7b, 8a, 8b show the symbols used for representing the valve of the present invention; the symbols of figures 7a and 8a indicate a valve with a fixed choke; figures 7b and 8b indicate a valve which a constant flow-rate.

With reference to the figures of the drawings, the valve of the present invention comprises at least a passage channel 2 having at least a sealed seating 3. At least an obturator 4 is slidable along a longitudinal axis x through the sealed seating 3 and is provided with at least a shaped portion 5 predisposed to be positioned in contact with the sealed seating 3 in order to obstruct the passage channel 2.

The passage channel 2 and the sealed seating 3 are afforded in a cylindrical body or piston 6, slidable along the longitudinal axis x between at least two extreme positions. As can be seen in the accompanying figures of the drawings, the passage channel 2 exhibits at least a lateral tract 2b and at least a central tract 2a, coaxial to the longitudinal axis x, internally of which the obturator 4 slides. The central tract 2a is closed at an end thereof, while at another rend thereof it opens on an external surface of the piston 6, thus defining the sealed seating 3. The sealed seating 3 is slidable along the longitudinal axis x between at least two extreme positions which are determined by the extreme positions reached by the piston 6. The shaped portion 5 of the obturator 4 exhibits a tapered shape an apex of which faces towards the central tract 2a of the passage channel 2, so that, for a given relative position between the sealed seating 3 and the obturator 4, at least an annular tract of the shaped portion 5 is arranged in contact with the sealed seating 3.

The piston 6 exhibits a first end surface 6a on which the sealed seating 3 is afforded, a second end surface 6b, opposite the previous surface 6a, and an intermediate recess 6c configured as a portion of the piston 6 with a smaller diameter. The piston 6 is sealedly slidable in a jacket 7 provided with at least an inlet opening 7a and at least an outlet opening 7b for the fluid. The jacket 7 is made of a hollow cylindrical element which is open at an end and at another end is positioned in a cavity having a closed bottom. The first surface 6a of the piston 6 defines, with the jacket 7, an outlet chamber 9 placed in communication with the outlet opening 7b. The second end surface 6b defines a thrust chamber 10 which is delimited by the closed end and by a tract adjacent to the closed end of the jacket 7. The intermediate recess 6c delimits, with a lateral portion of the jacket 7, an inlet chamber 8 located in communication with the inlet opening 7a and the thrust chamber 10. At least two seal rings insulate the inlet chamber, the outlet chamber and the thrust chamber against fluid leaks along the internal walls of the jacket 7.

The inlet chamber 8 and the thrust chamber 10 are placed in communication by means of a conduit 11 afforded in the piston 6. The conduit 11 extends between the second end surface 6b of the piston 6 and a lateral portion of the piston 6. The conduit 11 terminates in a circular channel 17 afforded on the external surface of the piston 6. The channel 17 is in communication with the inlet chamber 8 through a space 18 defined between an internal surface of the inlet chamber 8 and an external portion of the piston 6.

The valve further comprises elastic thrusting means 20, predisposed to exert a force of predetermined entity on the obturator 4, which force pushes the shaped portion 5 towards the sealed seating 3. The elastic thrusting means 20 are constituted by at least a helix spring arranged coaxially to the longitudinal axis x. The spring 20, at a first end 20a thereof, is located in contact with the obturator 4, and at a second end 20b thereof is in contact with a platelet 21, a position of which along the longitudinal axis x is adjustable by means which will be illustrated herein below.

The valve operates as will now be described herein below.

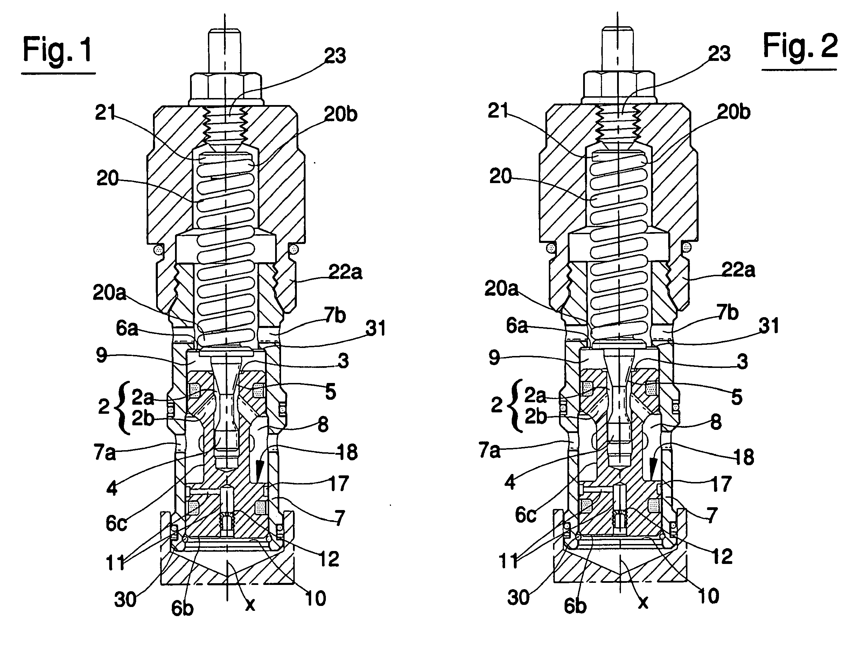

Figure 1 illustrates a rest configuration of the valve in which no pressurised fluid is sent to the inlet chamber 8. In this configuration the piston 6 is in a first end position, in which the second end surface 6b abuts against a shoulder or ring 30 arranged in proximity of the closed end of the jacket 7. In this first end position the thrust chamber 10 has a minimum volume inasmuch as the second end surface of the piston 6 is at the minimum distance from the end surface of the jacket 7, or is indeed resting against the end surface. In the rest configuration of the valve, the obturator 4 is arranged with its shaped portion 5 in contact with the sealed seating 3.

If in this valve configuration pressurised fluid is sent to the inlet chamber 8, i.e. the hydraulic actuator braking phase is initiated, the pressure in the inlet chamber 8 rapidly increases and the pressurised fluid, through the passage channel 2, acts on the shaped portion 5 of the obturator 4. When the pressure inside the inlet chamber 8 and the passage channel 2 reaches a value at which the thrust exerted on the shaped portion 5 of the obturator exceeds the opposing thrust exerted by the spring 20, the obturator 4 moves into the configuration illustrated in figure 2, in which the shaped portion 5 is removed from the sealed seating 3. The pressurised fluid, passing through the sealed seating 3, flows into the outlet chamber 9 and from here, through the outlet opening 7b, to the outside of the valve.

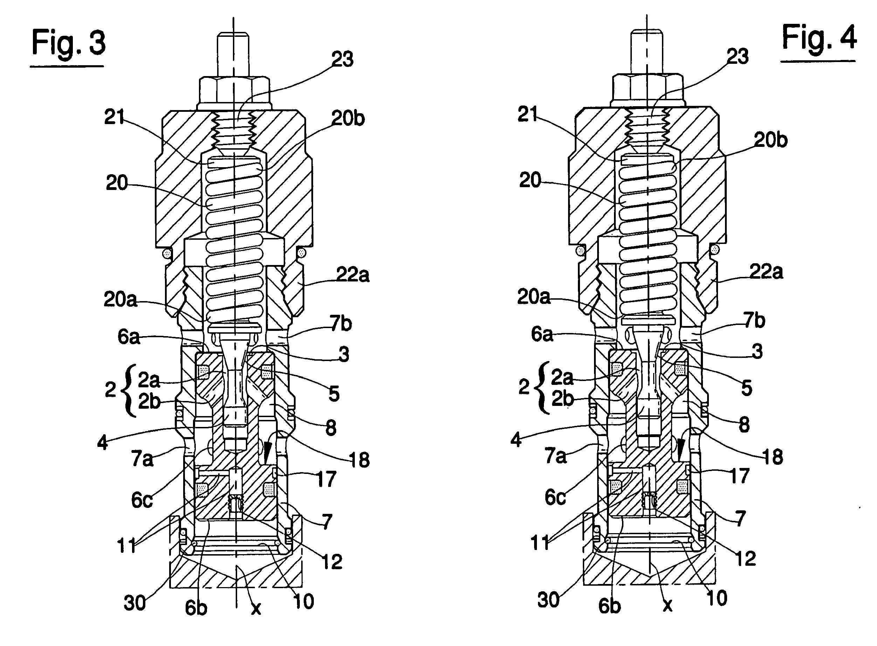

The pressurised fluid then passes through the space 18 and the conduit 11 and reaches the thrust chamber 10 internally of which the pressure increases. By effect of the increase of pressure internally of the thrust chamber 10 the piston 6 starts to move away from the end surface of the jacket 7 and the volume of the thrust chamber 10 increases. The sealed seating 3 is then pushed towards the shaped portion 5 of the obturator 4, against the force exerted by the elastic thrust means 20, by effect of the pressure that the fluid exhibits in the passage channel 2 upstream of the sealed seating 3. The piston 6 slides along the longitudinal axis x up until it reaches a second end position at which the first end surface 6a abuts against a second shoulder 31 of the jacket 7 (figure 3).

The piston 6 tends to draw the obturator 4 to slide in an opposite direction with respect to the action exerted by the spring 20 which, on compressing, increases its thrust and brings the shaped portion 5 of the obturator 4 into contact with the sealed seating 3. This leads to an increase in pressure internally of the inlet chamber 8 and an increase of thrust on the shaped portion 5 of the obturator 4. The pressure internally of the chamber 8 increases up until it reaches a value at which the thrust exerted on the obturator 4 is not sufficient newly to overcome the thrust exerted by the spring 20.

These stages, which have been described as if they happened separately, in reality develop incrementally, determining a transitory operating stage of the valve during which the pressure internally of the inlet chamber 8 increases continuously. The final stage is illustrated in figure 3, where the piston 6 has reached the extreme position in which the thrust chamber 10 assumes a maximum volume. At the end of the transitory operating stage the pressure internally of the inlet chamber 8 reaches a values that causes a balance between the thrust exerted by the spring 20 and the thrust exerted by the fluid on the shaped portion 5 of the obturator 4. In this final condition of equilibrium the shaped portion 5 of the obturator 4 is distanced from the sealed seating 3 and the fluid flows continuously to the outlet chamber 9, from which it exits the valve (figure 4) through the outlet opening 7b.

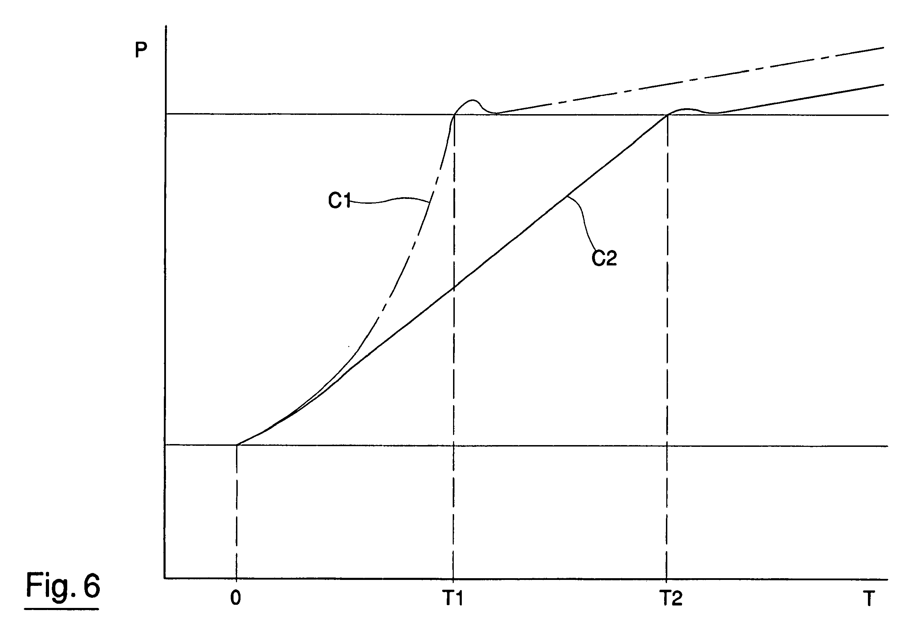

To control the duration of the operating time of the valve, the conduit 11 can be provided with a fixed choke 12 or with a constant- flow-rate choke (of known type and therefore not illustrated for reasons of simplicity). In the case of the fixed choke 12 the filling of the thrust chamber 10 and the physical laws governing the piston 6 motion are such that the pressure internally of the inlet chamber 8 increases as in the curve denoted by C 1 in the diagram of figure 6. In the case of the constant-flow-rate choke the pressure inside the inlet chamber 8 increases as in the curve denoted by C2. At an equal final pressure, the increase of pressure determined by a fixed choke is much more rapid with respect to the increase determined by a constant flow-rate choke. In the case of a fixed choke the operating time of the valve is shorter with respect to that of a variable flow-rate choke.

By blocking the supply of pressurised fluid to the inlet chamber 8 the valve is brought from the configuration of figure 4 to that of figure 1. In particular, the spring 20 returns the obturator 4 to strike in the sealed seating 3 and the piston 6 into the position in which the thrust chamber 10 has a minimum volume.

Advantageously the jacket 7 is constituted by a cylindrical tubular element which is closed at one end thereof by a surface, such as for example a screw cap. At the other end the jacket 7 is open and is associated to a hollow element 22. he hollow element 22 internally houses the platelet 21 and at least a portion of the helix spring 20, and is provided with a threaded external portion 22a by means of which it can be fixed to a seating during use. A calibrating screw 23 passes through the hollow element 22 and acts on the platelet 21, translating it along the longitudinal axis x. By acting on the calibration screw 23 it is possible to vary the initial length of the spring 20 and, consequently, to vary the force the spring 20 exerts on the obturator 4. This obviously leads to a variation in the minimum pressure necessary to cause displacement of the obturator 4 from the initial position of figure 1. In this embodiment the valve can be rapidly mounted and dismounted from the device or circuit in which it is used.

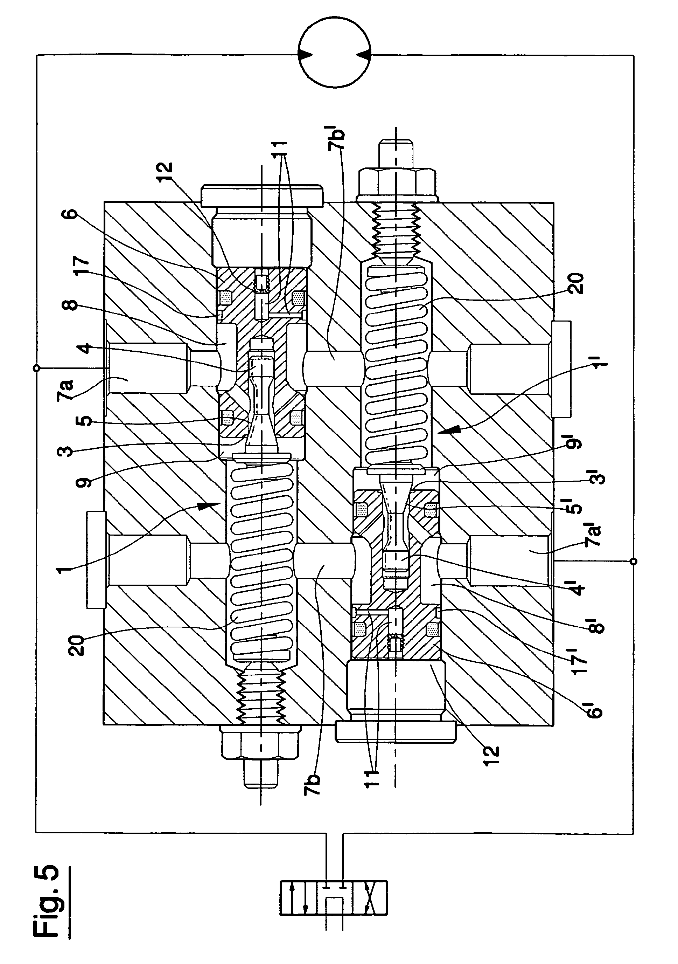

The valve of the present invention can also produce a two-way braking device comprising two valves 1, 1' of the described type, arranged so that the inlet opening 7a, 7'a of each valve is in communication with the outlet opening 7b, 7'b of the other valve. The device is schematically represented in figure 5, where it is shown in operation for braking a hydraulic motor which can be connected for example to the turret of a digging machine. In a situation in which the motor is in rotation induced by a supply of a pressurised fluid on the left side, with a consequent discharge of fluid from the right side (in the case of a rotation in an opposite direction the operation of the valves is inverted), the stopping of the rotation of the hydraulic motor means halting supply of pressurised fluid to the left side of the motor and the closure of the discharge branch positioned on the right side of the motor. Owing to the inertia of the masses connected to the hydraulic motor, the closure of the discharge branch causes a brusque rise in pressure internally of the discharge branch which is connected to the inlet opening 7a of the first valve 1. The first valve 1 is activated in the way previously described, producing a progressive braking action on the hydraulic motor. Part of the fluid present in the discharge branch causes an increase of pressure in the outlet chamber 9' of the second valve 1' which is in communication with the inlet chamber 8 of the first valve 1. The second valve 1', if in a different position from the rest position, is immediately brought into the rest position. The outletting fluid crosses the outlet opening 7b of the first valve 1 and transits through the inlet chamber 8' of the second valve 1', flowing into the inlet branch (on the left). This characteristic of the device of figure 5, i.e. the rapidity of return into the rest position of the valves 1, 1', is very important in the normal functioning of a two-way hydraulic actuator, where there are very frequent stops and direction inversions. In this sense it is very important that the first and second valve 1, 1', after entering into action, are rapidly brought back into the initial rest configuration in order to be ready for a further operation.

## Claims

1. A valve for progressive braking, comprising: at least a passage channel (2) for a fluid provided with at least a sealed seating (3); at least an obturator (4), slidable along a longitudinal axis (x) across the sealed seating (3), which obturator (4) is provided with at least a shaped portion (5) predisposed to be positioned in contact with the sealed seating (3) in such a way as to obstruct the passage channel (2); elastic thrust means (20), predisposed to exert on the obturator (4) a force of a predetermined intensity which pushes the shaped portion (5) towards the sealed seating (3); the sealed seating (3) being slidable along the longitudinal axis (x) between at least two end positions;
the passage channel (2) and the sealed seating (3) being afforded in a piston (6) which is slideable along the longitudinal axis (x) between at least two extreme positions corresponding to the at least two end positions of the sealed seating (3);
the piston (6) being slidable within a jacket (7), which jacket (7) is provided with at least an inlet opening (7a) and at least an outlet opening (7b);
**characterised by**,
the piston (6) exhibiting a first end surface (6a) on which the sealed seating (3) is afforded, a second end surface (6b) opposite the first end surface (6a), and an intermediate recess (6c) which respectively define, with the jacket (7), an outlet chamber (9) placed in communication with the outlet opening (7b), a thrust chamber (10) and an inlet chamber (8), the inlet chamber (8) being placed in communication with the inlet opening (7a) and the thrust chamber (10).

2. The valve of claim 1, wherein the sealed seating (3) is pushed towards the shaped portion (5) of the obturator (4) against the force exerted by the elastic thrust means (20), by effect of a pressure the fluid creates in the passage channel (2) upstream of the sealed seating (3).

3. The valve of claim 1 or 2, wherein the inlet chamber (8) and the thrust chamber (10) are placed in communication by a conduit (11) afforded in the piston (6).

4. The valve of claim 3, wherein the conduit (11) is provided with a fixed choke (12).

5. The valve of claim 3, wherein the conduit (11) is provided with a constant-flow-rate choke.

6. The valve of any one of the preceding claims, wherein the elastic thrust means (20) are constituted by at least a helix spring arranged coaxially to the longitudinal axis (x), which at a first end (20a) is placed in contact with the obturator (4), and at a second end (20b) is placed in contact with a platelet (21) a position of which along the longitudinal axis (x) is adjustable.

7. The valve of claim 6, wherein the jacket (7) is constituted by a cylindrical tubular element which exhibits an open end at which it is associated to a hollow element (22) predisposed to house the platelet (21) and at least a portion of the helix spring (20), the hollow element (22) being provided with an external threaded portion (22a) by means of which it can be fixed to a seating.

8. A two-way braking device, **characterised in that** it comprises two valves (1, 1') according to any one of the preceding claims, which two valves are arranged in such a way that the inlet opening (7a, 7'a) of each valve is placed in communication with the outlet opening (7b, 7b') of the other valve.

## Patentansprüche

1. Ventil zum progressiven Bremsen, enthaltend: wenigstens einen Durchlaufkanal (2) für ein Fluid, versehen mit wenigstens einem Dichtungssitz (3); wenigstens einen Verschluss (4), gleitbar entlang einer Längsachse (x) durch den Dichtungssitz (3), welcher Verschluss (4) mit wenigstens einem profilierten Abschnitt (5) versehen ist, dazu vorgesehen, im Kontakt mit dem Dichtungssitz (3) auf solche Weise angeordnet zu werden, dass der Durchlaufkanal (2) verschlossen wird; elastische Druckmittel (20), dazu vorgesehen, auf den Verschluss (4) eine Kraft von einer vorgegebenen Stärke auszuüben, welche den profilierten Abschnitt (5) zu dem Dichtungssitz (3) hin schiebt; wobei der Dichtungssitz (3) entlang der Längsachse (x) zwischen wenigstens zwei Endpositionen verschiebbar ist; wobei der Durchlaufkanal (2) und der Dichtungssitz (3) in einem Kolben (6) aufgewiesen sind, welcher entlang der Längsachse (x) gleitbar ist, und zwar zwischen zwei extremen Positionen entsprechend wenigstens zwei Endpositionen des Dichtungssitzes (3); und wobei der Kolben (6) im Inneren eines Mantels (7) gleitbar ist, welcher Mantel (7) mit wenigstens einer Einlassöffnung (7a) und wenigstens einer Auslassöffnung (7b) versehen ist; **dadurch gekennzeichnet, dass** der Kolben (6) eine erste Endfläche (6a) hat, an welcher der Dichtungssitz (3) aufgewiesen ist, eine zweite Endfläche (6b), entgegengesetzt von der ersten Endfläche (6a), und eine mittig angeordnete Vertiefung (6c), welche jeweils mit dem Mantel (7) eine Auslasskammer (9), angeordnet in Verbindung mit der Auslassöffnung (7b), eine Druckkammer (10) und eine Einlasskammer (8) beschreiben, wobei die Einlasskammer (8) in Verbindung mit der Einlassöffnung (7a) und der Druckkammer (10) angeordnet ist.

2. Ventil nach Patentanspruch 1, bei welchem der Dichtungssitz (3) zu dem profilierten Abschnitt (5) des Verschlusses (4) hin entgegen der Kraft geschoben wird, die durch die elastischen Druckmittel (20) ausgeübt wird, und zwar durch die Wirkung eines Druckes, den das Fluid in dem Durchlaufkanal (2) stromaufwärts des Dichtungssitzes (3) erzeugt.

3. Ventil nach Patentanspruch 1 oder 2, bei welchem die Einlasskammer (8) und die Druckkammer (10) durch eine Leitung (11) in Verbindung miteinander gebracht sind, die in dem Kolben (6) aufgewiesen ist.

4. Ventil nach Patentanspruch 3, bei welchem die Leitung (11) mit einer feststehenden Drossel (12) versehen ist.

5. Ventil nach Patentanspruch 3, bei welchem die Leitung (11) mit einer Drossel von gleichbleibender Durchflussmenge versehen ist.

6. Ventil nach einem beliebigen der vorstehenden Patentansprüche, bei welchem die elastischen Druckmittel (20) aus wenigstens einer Schneckenfeder gebildet sind, angeordnet koaxial zu der Längsachse (x), welche mit einem ersten Ende (20a) im Kontakt mit dem Verschluss (4) angeordnet ist und mit dem zweiten Ende (20b) im Kontakt mit einer Platte (21), von welcher die Position entlang der Längsachse (x) verstellbar ist.

7. Ventil nach Patentanspruch 6, bei welchem der Mantel (7) aus einem zylindrischen rohrförmigen Element gebildet ist, welches ein offenes Ende aufweist, mit welchem es an ein hohles Element (22) angeschlossen ist, dazu vorgesehen, die Platte (21) und wenigstens einen Abschnitt der Schneckenfeder (20) aufzunehmen, wobei das hohle Element (22) mit einem äusseren Gewindeabschnitt (22a) versehen ist, mit Hilfe von welchem es an einem Sitz befestigt werden kann.

8. Zweiwege-Bremsvorrichtung, **dadurch gekennzeichnet, dass** sie in Übereinstimmung mit einem jeden der vorstehenden Patentansprüche zwei Ventile (1, 1') enthält, welche zwei Ventile auf solche Weise angeordnet sind, dass die Einlassöffnung (7a, 7a') eines jeden Ventils in Verbindung mit der Auslassöffnung (7b, 7b') des anderen Ventils gebracht ist.

## Revendications

1. Vanne de freinage progressif, comprenant: au moins un canal de passage (2) pour un fluide pourvu d'au moins un logement d'étanchéité (3); au moins un obturateur (4), coulissant le long d'un axe longitudinal (x) au travers du logement d'étanchéité (3), lequel obturateur (4) est pourvu d'au moins une portion profilée (5) prédisposée pour être positionnée en contact avec le logement profilé (3) de manière à obstruer le canal de passage (2); des moyens élastiques de poussée (20), prédisposés pour exercer sur l'obturateur (4) une force d'une intensité prédéterminée qui pousse la portion profilée (5) vers le logement d'étanchéité (3); le logement d'étanchéité (3) étant coulissant le long de l'axe longitudinal (x) entre au moins deux positions d'extrémité; le canal de passage (2) et le logement d'étanchéité (3) étant formés dans un piston (6) coulissant le long de l'axe longitudinal (x) entre au moins deux positions extrêmes correspondant aux au moins deux positions d'extrémité du logement d'étanchéité (3); le piston (6) étant coulissant à l'intérieur d'une chemise (7), laquelle chemise (7) étant pourvue d'au moins une ouverture d'entrée (7a) et d'au moins une ouverture de sortie (7b) ;
**caractérisé en ce que** le piston (6) présente une première surface d'extrémité (6a) sur laquelle le logement d'étanchéité (3) est formé, une seconde surface d'extrémité (6b) opposée à la première surface d'extrémité (6a), et un renfoncement intermédiaire (6c) définissant respectivement, avec la chemise (7), une chambre de sortie (9) mise en communication avec l'ouverture de sortie (7b), une chambre de poussée (10) et une chambre d'entrée (8), la chambre d'entrée (8) étant mise en communication avec l'ouverture d'entrée (7a) et la chambre de poussée (10).

2. Vanne selon la revendication 1, dans laquelle le logement d'étanchéité (3) est poussé vers la portion profilée (5) de l'obturateur (4) en opposition à la force exercée par les moyens élastiques de poussée (20), sous l'effet d'une pression que le fluide crée dans le canal de passage (2) en amont du logement d'étanchéité (3).

3. Vanne selon la revendication 1 ou 2, dans laquelle la chambre d'entrée (8) et la chambre de poussée (10) sont mises en communication par un conduit (11) formé dans le piston (6).

4. Vanne selon la revendication 3, dans lequel le conduit (11) est pourvu d'un étranglement fixe (12).

5. Vanne selon la revendication 3, dans lequel le conduit (11) est pourvu d'un étranglement à débit constant.

6. Vanne selon n'importe laquelle des revendications précédentes, dans laquelle les moyens élastiques de poussée (20) sont constitués d'au moins un ressort hélicoïdal disposé coaxialement à l'axe longitudinal (x), qui, en correspondance d'une première extrémité (20a), est mis en contact avec l'obturateur (4), et en correspondance d'une seconde extrémité (20b) est mis en contact avec une plaquette (21) dont une position le long de l'axe longitudinal (x) est réglable.

7. Vanne selon la revendication 6, dans laquelle la chemise (7) est constituée d'un élément tubulaire cylindrique présentant une extrémité ouverte en correspondance de laquelle est associé un élément creux (22) prédisposé pour loger la plaquette (21) et au moins une portion du ressort hélicoïdal (20), l'élément creux (22) étant pourvu d'une portion externe filetée (22a) au moyen de laquelle il peut être fixé à un logement.

8. Dispositif de freinage bidirectionnel, **caractérisé en ce qu'**il comprend deux vannes (1, 1') selon n'importe laquelle des revendications précédentes, lesquelles deux vannes étant disposées de manière à ce que l'ouverture d'entrée (7a, 7'a) de chaque vanne soit mise en communication avec l'ouverture de sortie (7b, 7b') de l'autre vanne.
